# EUROPEAN PATENT APPLICATION

(11) **EP 2 340 923 A1**
(43) Date of publication of application: **06.07.2011**
(21) Application number: 09816254.8
(22) Date of filing: 28.09.2009
(51) Int. Cl.: B29C 45/40, B29C 45/17, B29C 45/34

(54) **METHOD FOR PRODUCING INJECTION MOLDED PRODUCT AND INJECTION MOLDING DIE**

(30) Priority: 29.09.2008 JP 2008250982
(71) Applicant: Bridgestone Corporation, Tokyo 104-8340 (JP)
(72) Inventor: FUKUTA, Yasunori, Yokohama-shi Kanagawa 244-8510 (JP)
(74) Representative: Oxley, Robin John George
(86) International application number: PCT/JP2009/066815
(87) International publication number: WO 2010/035840

(57) **Abstract**

An object of the present invention is to provide a method of producing an injection-molded article and a mold for injection molding, which can reliably effect control on a mold section on which a molded article should be left when a mold is opened, thus allow efficient automation of the production process of a molded article, and is applicable to production of a relatively soft molded article. Specifically, the present invention provides a mold 10 for injection molding, comprising: a fixed mold 20 and a movable mold 30 for defining a cavity 50 for molding when the mold is closed; a material injection means 25, 26, 27 provided in at least one of the fixed mold 20 and the movable mold 30, for injecting a molding material into the cavity 50; a molded-article removal means 37, 38 provided in any one of the fixed mold 20 and the movable mold 30, for removing a molded article from the mold after the mold is opened; and a reduced pressure suction path provided in the mold 30 having the molded-article removal means 37, 38 therein and capable of depressurizing the cavity 50. The method of producing an injection-molded article of the present invention employs the mold 10 for injection molding.

## Description

### Technical Field

The present invention relates to a method of producing an injection-molded article and a mold for injection molding. In particular, the present invention relates to a method of producing an injection-molded article and a mold for injection molding for use in the production method, which method and mold can improve operation efficiency in removing an injection-molded article from a mold.

### Prior Art

In a case where a resin is molded by using a mold provided with ejector pins, it is generally preferable that when the mold is opened a molded article is left on the side provided with the ejector pins (normally the movable mold side), of the mold, in terms of efficiently removing the molded article from the mold. In a case where a molded article is left on the side provided with ejector pins, of a mold, as described above, the molded article can be then automatically removed from the mold by projection of the ejector pins, so that the production efficiency improves.

Therefore, when a resin is to be molded, following methods of producing injection-molded articles have conventionally been employed, in each of which methods a mold section on the side on which a molded article should be left when the mold is opened is controlled by, e.g., (1) tapering one mold on one side on which a molded article should not be left, while reverse-tapering the other mold on the other side on which the molded article should be left, or (2) providing a molded article with a tapered portion, or (3) subjecting one mold on one side on which a molded article should not be left to mold-releasing surface treatment, or (4) using a mold-releasing agent.

On the other hand, there has been known, as an ejector device for taking a preform out of a mold by using an ejector piston which can be ejected toward the external side by compressed air, an ejector device having a relatively large through hole at the center of the ejector piston so that the preform can be sucked through the through hole when the preform is cooled (JP 2000-511837 Laid-Open). A cylindrical bush including this ejector device at the lower portion thereof allows, after a preform is efficiently cooled by closely attaching the cylindrical bush thereto by suction through the through hole, the preform to be removed from the cylindrical bush by ejecting the ejector piston by using compressed air.

Disclosure of the Invention

### Problems to be solved by the Invention

However, the processing and/or the treatment of a mold or use of a mold-releasing agent according to the prior art as described above requires significant labor and cost for the processing/treatment of the mold, cannot reliably effect control on a mold section on which a molded article should be left, and often ends up with, especially in a case where a soft molded article is produced by using a material having relatively low viscosity, a situation in which a molded article is left on the side opposite to the side on which the molded article should be left. Accordingly, there has been a demand for a method of producing an injection-molded article and a mold for injection molding, which can reliably effect control on a mold section on which a molded article should be left when a mold is opened and thus allows efficient automation of the production process of a molded article.

In developing such a production method and a mold as described above, it is necessary to develop a molded-article production method which does not use a device having such a large open hole as disclosed in JP 2000-511837 because the production method and the mold should allow production of a soft molded article using a material having relatively low viscosity such as elastomer, in addition to production of molded articles using ordinary materials. If a device having such a large open hole as disclosed in JP 2000-511837 were to be used, a material having relatively low viscosity would flow into the large open hole and deteriorate the molding quality when a molded article is produced by using the material having relatively low viscosity.

### Means for solving the Problems

The present invention aims at advantageously solving the problems described above and characteristically provides a mold for injection molding, comprising: a fixed mold and a movable mold for defining a cavity for molding when the mold is closed; a material injection means provided in at least one of the fixed mold and the movable mold, for injecting a molding material into the cavity; a molded-article removal means provided in the fixed mold or the movable mold, for removing a molded article from the mold after the mold is opened; and a reduced pressure suction path provided in the mold having the molded-article removal means therein and capable of depressurizing the cavity. By providing the mold section having the molded-article removal means therein, i.e. the mold section on which the molded-article should be left when the mold is opened, with the reduced pressure suction path for depressurizing the cavity, a molded article inside the cavity can be sucked by reduced pressure by using the reduced pressure suction path when the mold is opened so that the mold section on which the molded article should be left when the mold is opened can be controlled in a highly precise manner.

In the present invention, dimensions of the reduced pressure suction path can be designed such that a molded article is free of any trace of the shape of the reduced pressure suction path, in view of viscosity of a molding material, injection pressure at which the molding material is injected, suction pressure during suction under reduced pressure, and the like. That is, dimensions of the reduced pressure suction path can be designed such that resin in a molten state is prevented from entering the path but gas can pass through the path. Specifically, in a case where a relatively soft molded article is to be produced, the dimension (clearance) of a connecting portion between the reduced pressure suction path and the cavity may be in the range of 0.003 to 0.015 mm, and preferably in the range of 0.005 to 0.010 mm. The mold section on which a molded article is to be left when the mold is opened can be more reliably controlled than otherwise by setting the aforementioned clearance equal to or larger than 0.003 mm. Generation of flash (i.e. trace of suction under reduced pressure) in a molded article can be more reliably prevented from occurring than otherwise by setting the aforementioned clearance equal to or smaller than 0.015 mm. The aforementioned clearance is preferably in the range of 0.005 to 0.010 mm in terms of reliably controlling the mold section on which a molded article is to be left and reliably preventing generation of flash.

In the mold for injection molding of the present invention, it is preferable that the molded-article removal means is an ejector pin projectable toward the cavity and the reduced pressure suction path is formed by utilizing clearance between each ejector pin and the mold. In a case where the reduced pressure suction path is formed by utilizing a very narrow clearance between each ejector pin and the mold as described above, it is unnecessary to especially form a hole for reduced pressure suction path in the mold and thus a mold for injection molding can be easily produced by utilizing an existent mold without significantly modifying it Further, the number of sites where flash is generated does not increase because a hole specifically used as reduced pressure suction path need not be separately provided. Yet further, since clearance between the ejector pin and the mold is very narrow, the shape of the reduced pressure suction path is prevented from being traced on a molded article even in a case where a molded article is produced by using a material having relatively low viscosity such as elastomer.
Yet further, in a case where a molded article in the cavity is suctioned by reducing pressure by way of the clearance between the ejector pin and the mold, the suction force is exerted over a relatively wide area in a dispersed manner along the outer periphery of the ejector pin, whereby the molded article can be reliably sucked, the mold section on the side on which a molded article is to be left when the mold is opened can be reliably controlled, and flash is significantly prevented from being generated even when a molded article is produced by using a material having relatively low viscosity, as compared with the case where suction under reduced pressure is carried out by specifically forming a hole for that purpose. Yet further, in the case where the reduced pressure suction path is formed by utilizing clearance between each ejector pin and the mold, a space essentially provided in the mold for allowing projection/retraction of the ejector pin causes a buffering effect during suction under reduced pressure, whereby pressure during the reduced pressure suction can be reliably controlled and distortion of a molded article can be significantly prevented from occurring when the molded article is produced by using a material having a relatively low viscosity. Yet further, in the case where a molded article is suctioned by reducing pressure by way of the clearance between each ejector pin and the mold, the molded article is sucked in a direction parallel to the approaching/separating direction (the closing/opening direction) of the mold sections, whereby a molded article can be reliably sucked and the mold section on the side on which the molded article is to be left when the mold is opened is reliably controlled, as compared with a case where the molded article is sucked in other directions (such as a direction perpendicular to the approaching/separating direction of the mold sections). Yet further, a molded article can be reliably and easily removed from the mold by using the ejector pin, as compared with a case where other molded-article removal means such as an air ejector is employed, because the ejector pin protrudes/retracts in the approaching/separating direction of the mold sections and ensures reliable removal of the molded article from the mold.
The dimension of the aforementioned clearance can be set so as to prevent a molten resin from entering the clearance and allow gases to pass through the clearance, in view of the sliding properties of the ejector pin. The dimension of the clearance is preferably in the range of 0.003 to 0.015 mm and more preferably in the range of 0.005 to 0.010 mm. The mold section on which a molded article is to be left when the mold is opened can be more reliably controlled than otherwise by setting the aforementioned clearance equal to or larger than 0.003 mm. Generation of flash (i.e. trace of suction under reduced pressure) in a molded article can be more reliably prevented from occurring by setting the aforementioned clearance equal to or smaller than 0.015 mm than otherwise. The aforementioned clearance is preferably in the range of 0.005 to 0.010 mm in terms of reliably controlling the mold section on which a molded article is to be left and reliably preventing generation of flash.

A method of producing an injection-molded article by using the aforementioned mold for injection molding, of the present invention, comprises the steps of: bringing the fixed mold and the movable mold into close contact to close the mold and form the cavity; forming a molded article by injecting a molding material into the cavity by using the material injection means; separating the fixed mold and the movable mold to break the close contact therebetween and open the mold; and removing the molded article by the molded-article removal means to collect the molded article, wherein suction under reduced pressure is applied to the cavity by using the reduced pressure suction path at least in the mold-opening step. A molded article is sucked on the side of the reduced pressure suction path inside the cavity as a result of the suction under reduced pressure inside the cavity using the reduced pressure suction path. Accordingly, by opening the mold while carrying out reduced pressure suction by the reduced pressure suction path as in the present invention, the mold can be opened such that a molded article is left on the mold section in which the reduced pressure suction path is provided.

Suction by reduced pressure is preferably carried out under a suction pressure in the range of -85 to -100 kPa. The mold section on the side on which a molded article is to be left can be more reliably controlled than otherwise by setting the suction pressure equal to or stronger than -85 kPa.

In the method of producing an injection-molded article of the present invention, it is preferable that suction by reduced pressure is stopped prior to the molded-article collecting step. A force required for removing a molded article, i.e. load exerted on the molded article, can be made relatively small by stopping reduced pressure suction prior to the molded-article collecting step. As a result, time and energy necessary for suction can also be reduced. In the present invention, suction under reduced pressure can be started at any time prior to opening the mold. For example, in a case where suction under reduced pressure is carried out when a material is injected, the material can be reliably injected into the cavity. In the case where suction under reduced pressure is carried out when a material is injected, as well as during the mold-opening process, the suction pressure may be varied between injection of the material and opening of the mold.

### Effect of the present Invention

According to the mold for injection molding of the present invention, since the reduced pressure suction path for depressurizing the cavity is provided in a mold section in which the molded-article removal means is provided, i.e. a mold section on which a molded article is to be left when the mold is opened, the mold section on the side on which the molded article is to be left when the mold is opened can be highly precisely controlled by sucking the molded article in the cavity under reduced pressure by using the reduced pressure suction path when the mold is opened. The mold for injection molding of the present invention can be used for producing a relatively soft molded article (e.g. a molded article of elastomer having JISA hardness not larger than 60°) by adjusting the dimension of the reduced pressure suction path. In particular, the mold for injection molding of the present invention can be preferably used for producing a relatively soft molded article having JISA hardness not larger than 20°.

Further, according to the method of producing an injection-molded article of the present invention, since the mold is opened while suction under reduced pressure is carried out, the mold can be opened such that a molded article is left on the mold section in which the reduced pressure suction path is provided.

### Brief Description of the Drawings

FIG. 1 is an explanatory sectional view showing a basic structure of a mold for injection molding according to one embodiment of the present invention.
FIG. 2A is an explanatory view showing the mold-closing step, of the steps of producing a molded article by the mold for injection molding of FIG. 1.
FIG. 2B is an explanatory view showing the molding step, of the steps of producing a molded article by the mold for injection molding of FIG. 1.
FIG. 2C is an explanatory view showing the mold-opening step, of the steps of producing a molded article by the mold for injection molding of FIG. 1.
FIG. 2D is an explanatory view showing the molded-article collecting step, of the steps of producing a molded article by the mold for injection molding of FIG. 1.
FIG. 3 is an explanatory view showing an apparatus for injection molding and a reduced pressure suction apparatus for use in the one embodiment of the present invention.

### Best Mode for implementing the Invention

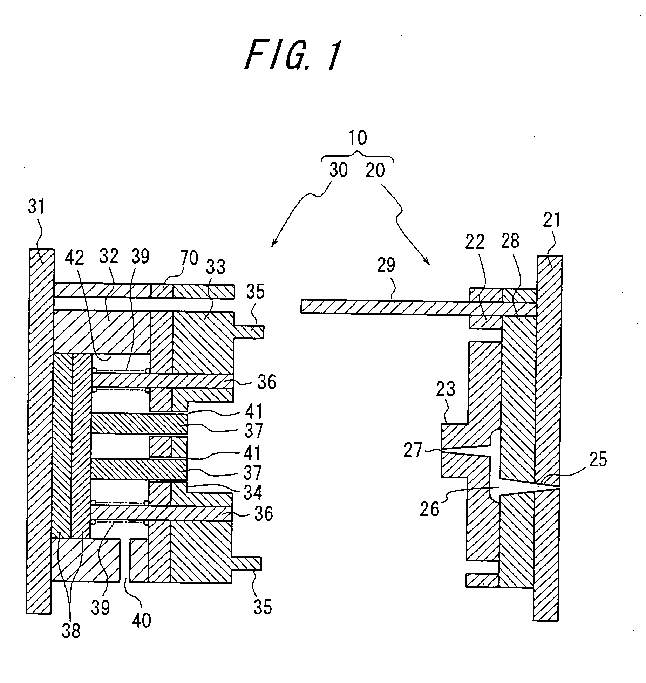

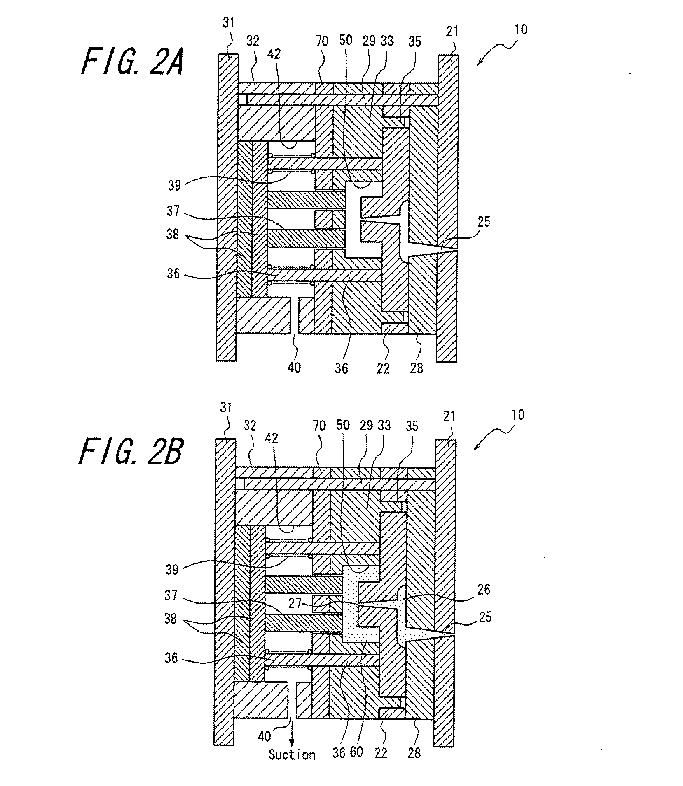

One embodiment of the present invention will be described in detail with reference to drawings. In the present embodiment, FIG. 1 is an explanatory sectional view showing a basic structure of a mold for injection molding according to the one embodiment of the present invention. FIGS. 2A to 2D are explanatory views showing the process of producing a molded article by using the mold for injection molding shown in FIG. 1.

As shown in FIG. 1 and FIGS. 2A to 2D, a mold 10 for injection molding of the one embodiment of the present invention includes a fixed mold (section) 20 and a movable mold (section) 30. The fixed mold 20 and the movable mold 30 define inside the mold 10 a cavity 50 for molding, which cavity takes a desired shape of a molded article when the mold is closed. The mold 10 for injection molding is used in a state where the mold is mounted on a conventional injection molding apparatus (not shown). Specifically, in order to produce e.g. sixteen molded articles simultaneously, sixteen fixed molds 20 are mounted on the fixed side of the injection molding apparatus and sixteen movable molds 30 are mounted on the movable side of the injection molding apparatus such that the movable molds 30 face the fixed molds 20, respectively. In the present embodiment, the mold 10 for injection molding is a 3 plate-type mold, although the present specification omits detailed drawings and descriptions thereof. The present invention is applicable to either a 2 plate-type mold or a 3 plate-type mold.

In the present embodiment, the fixed mold 20 includes a fixed-side mounting plate 21 for fixing the fixed mold 20 on the injection molding apparatus by bolts or clamps (not shown), a runner stripper plate 28, a fixed-side mold plate 22, and a first molded-article forming portion 23 provided in the fixed-side mold plate 22 for forming a part of the cavity 50 when the mold is closed. Further, the fixed-side mold plate 22 is provided with a guide bush (now shown) with which a guide pin 35 of the movable mold 30 is engaged to align the movable mold 30 with the fixed mold 20 when the mold is closed. Yet further, the fixed mold 20 is provided with a passage as a material injection means for injecting molten resin such as elastomer resin as a molding material into the cavity 50 by injecting the molten resin from an injection device of the injection molding apparatus to the caviety in the molding process. This passage is constituted of a sprue 25, a runner 26 and a gate 27. When a molded article is produced, the molding material charged through the sprue 25 passes through the runner 26 and is injected into the cavity 50 from the gate 27. The fixed mold 20 has a conventional structure of a 3 plate-type mold which includes: a support pin 29 (only an upper-side support pin is shown and a lower-side support pin is omitted in FIGS. 1-3) engageable with a guide bush (not shown) of the movable mold 30 when the mold is closed so that the support pin 29 can guide movements of the runner stripper plate 28 and the fixed-side mold plate 22; a stop bolt (not shown); a tension link (not shown); and the like.

The movable mold 30 includes: a movable-side mounting plate 31 for fixing the movable mold 30 on a movable plate of the injection molding apparatus by bolts (not shown); a spacer block 32 fixed on the movable-side mounting plate 31 by a fixing means (not shown) such as a bolt; a movable-side mold plate 33 provided further on the fixed mold 20 side than the spacer block 32 is (i.e. on the right-hand side of the spacer block 32 in FIG. 1) and having a second molded-article forming portion 34 for defining the cavity 50 together with the first molded-article forming portion 23 when the mold is closed; a receiving plate 70 provided between the spacer block 32 and the movable-side mold plate 33; a guide pin 35 provided on the movable-side mold plate 33 and engageable with the guide bush of the fixed mold 20 when the mold is closed; and a guide bush engageable with the support pin 29 of the fixed mold 20.

Further, two ejector pins 37 and two ejector plates 38 as a molded-article removal means for removing a molded article from the mold, as well as two return pins 36 for assisting the ejector plates 38 to be moved and positioned on the side of the movable-side mounting plate 31 when the mold is closed and also alleviating impact upon closing the mold, are provided inside the spacer block 32, the receiving plate 70 and the movable-side mold plate 33 of the movable mold 30. Specifically, the two ejector plates 38 are provided in a space 42 on the inner side of the spacer block 32 so as to be capable of advancing/retreating in the left hand/right hand side in FIG. 1. Further, the two ejector pins 37 extending to the second molded-article forming portion 34 (a surface defining the cavity 50) and the two return pins 36 extending to the abutting face between the movable mold 30 and the fixed mold 20, which pins 37, 36 are mounted on one ejector plate 38 on the fixed mold 20 side (the right hand side in FIG. 1), are fixed from the back side thereof by the other ejector plate 38 (positioned on the movable-side mounting plate 31 side). In the present embodiment, each return pin 36 is provided with a spring 39 as an elastic body so that the spring 39 constantly biases the ejector plates 38 in a direction from the movable-side mold plate 33 toward the movable-side mounting plate 31 (the left hand side in FIG. 1).

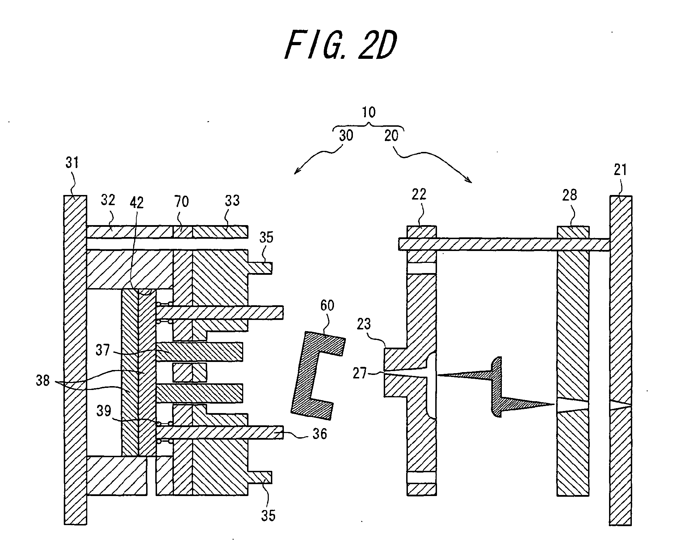

According to the structure of the movable mold 30 as described above, by pushing the ejector plates 38 toward the movable-side mold plate 33 by the ejector device of the injection molding apparatus against a force of the spring 39 after the mold is opened, the ejector pins 37 protrude from a surface of the second molded-article forming portion 34 defining the cavity 50 and thus a molded article can be reliably removed from the mold (see FIG. 2D). After the molded article is removed, the ejector plates 38 are moved toward the movable-side mounting plate 31 side by the resilient force of the spring 39. If the resilient force exerted by the spring 39 alone has failed to return the ejector plates 38 to the original positions thereof prior to being pushed by the ejector device, the ejector plates 38 will be completely returned to the original positions thereof prior to being pushed by the ejector device when the next molded article is produced because then the fixed mold 20 and the movable mold 30 are brought into contact and the return pins 36 are pushed toward the movable-side mounting plate 31 side by the fixed mold 20.

The spacer block 32 of the movable mold 30 is provided with a reduced pressure suction hole 40 for making the space 42 communicate with a reduced pressure suction apparatus (not shown) such as a vacuum pump. A clearance 41 in the range of 0.003 to 0.015 mm is provided between each ejector pin 37 and the layers of the movable-side mold plate 33 and the receiving plate 70. Accordingly, when the reduced pressure suction apparatus is connected to the reduced pressure suction hole 40 to effect suction under reduced pressure, the clearance 41, the space 42 and the reduced pressure suction hole 40 form a reduced pressure suction path and the inside of the cavity 50 is sucked under reduced pressure along the outer periphery of the ejector pins 37 in a direction parallel to the approaching/separating direction (the closing/opening direction) of the mold 10. The space 42 causes a buffering effect to stabilize the suction pressure during suction under reduced pressure. The molding material does not flow into the clearance 41 from the cavity 50 during the molding process and generation of flash in a molded article can be prevented because the clearance 41 is very narrow.

The procedures of producing an injection-molded article 60 by using the mold 10 for injection molding described above will be described with reference to FIGS. 2A to 2D.

First, the movable mold 30 is brought into close contact with the fixed mold 20 and fixed at that position to close the mold by using a mold closing mechanism of the injection molding apparatus, while aligning the movable mold 30 with the fixed mold 20 by using the guide pin 35 of the movable mold 30 and the guide bush of the fixed mold 20, to form the cavity 50 (see FIG. 2A). In a case where the resilient force exerted by the spring 39 alone has failed to return the ejector plates 38 to the original positions thereof prior to being pushed by the ejector device, the return pins 36 are pushed at this stage so that the ejector plates 38 will be completely returned to the original positions thereof prior to being pushed by the ejector device.

Next, molten resin (elastomer resin) as the molding material is injected into the cavity 50 from the injection device of the injection molding apparatus through the sprue 25, the runner 26 and the gate 27, to produce a molded article 60 (see FIG. 2B). At this stage, the inside of the cavity is preferably depressurized to, e.g. -85 to -100 kPa, by the reduced pressure suction apparatus provided at the reduced pressure suction hole 40 in order to ensure rapid and sufficient charge of the resin into the cavity 50.

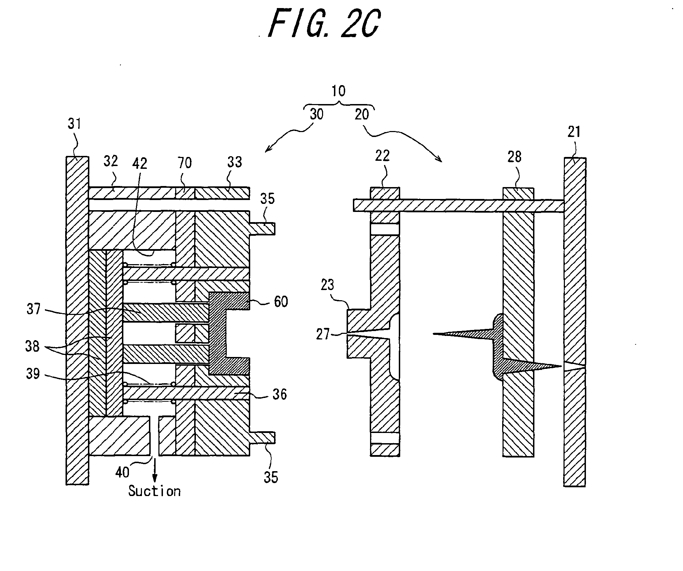

The material injected into the cavity 50 is then cooled and cured by using a conventional means to a hardness which allows the molded article 60 to be removed from the mold. The movable mold 30 is then separated from the fixed mold 20 to open the mold 10 in a state where a suction pressure in the range of -85 to -100 kPa is applied by the reduced pressure suction apparatus provided at the reduced pressure suction hole 40. The molded article 60 is left on the side of the movable mold 30 when the mold is opened because the molded article 60 is sucked toward the movable mold 30 side by the reduced pressure suction apparatus (see FIG. 2C).

Finally, after the suction under reduced pressure by the reduced pressure suction apparatus is stopped, the ejector plates 38 are pushed toward the movable-side mold plate 33 side by the ejector device of the injection molding apparatus against the force of the spring 39 so that the ejector pins 37 protrude from the surface of the second molded-article forming portion 34 defining the cavity 50, to remove the molded article 60 from the mold (see FIG. 2D). As shown in FIG. 2C and FIG. 2D, the cured resin still remaining in the sprue 25, the runner 26 and the gate 27 of the fixed mold 20 can be removed by using a resin-removal robot or the like (not shown).

According to the method of producing an injection-molded article by using the mold 10 for injection molding of the present embodiment, it is possible to reliably leave the injection-molded article 60 on the side of the movable mold 30 (i.e. the side of the mold section where the ejector pins 37 and the reduced pressure suction hole 40 are provided) when the mold is opened.

In the present embodiment, the inside of the cavity 50 is sucked under reduced pressure by using the clearance 41 between each ejector pin 37 and the layers of the movable-side mold plate 33 and the receiving plate 70. However, the method of producing an injection-molded article and the mold for injection molding of the present invention are not restricted to those of the present embodiment and a path used especially for suction under reduced pressure may be separately provided in the mold. More specifically, a through hole for making the cavity communicate with the external side of the movable mold may be provided as a reduced pressure suction path in the movable mold in a manner the through hole satisfies the aforementioned predetermined clearance requirement. Further, in a mold where a cavity is defined by plural pieces (or inserts), the inside of the cavity may be depressurized by using, as the reduced pressure suction path, clearance between the pieces and/or clearance between the piece and the mold. Yet further, the ejector pins 37 and the path for suction under reduced pressure may be provided on the side of the fixed mold. Yet further, the method of producing an injection-molded article and the mold for injection molding of the present invention may be employed in a 2 plate-type mold.

Yet further, the method of producing an injection-molded article and the mold for injection molding of the present invention may be employed together with the conventional techniques for controlling a mold section on the side on which a molded article is to be left, such as a mold surface treatment.

In the present invention, a mold section having the molded-article removal means provided therein is further provided with the reduced pressure suction path for suction under reduced pressure, so that a molded-article is controllably left on the mold section when the mold is opened. However, in the present invention, it is acceptable to provide a mold section facing the mold section having the molded-article removal means, with a pressurizing path, so that pressurized air or the like blown from the pressurizing path presses a molded article against the mold section having the molded-article removal means when the mold is opened to effect control on the mold section on the side on which the molded article is to be left when the mold is opened.

### Examples

Examples of the present invention will be described in detail hereinafter. It should be noted that the present invention is not restricted to these Examples.

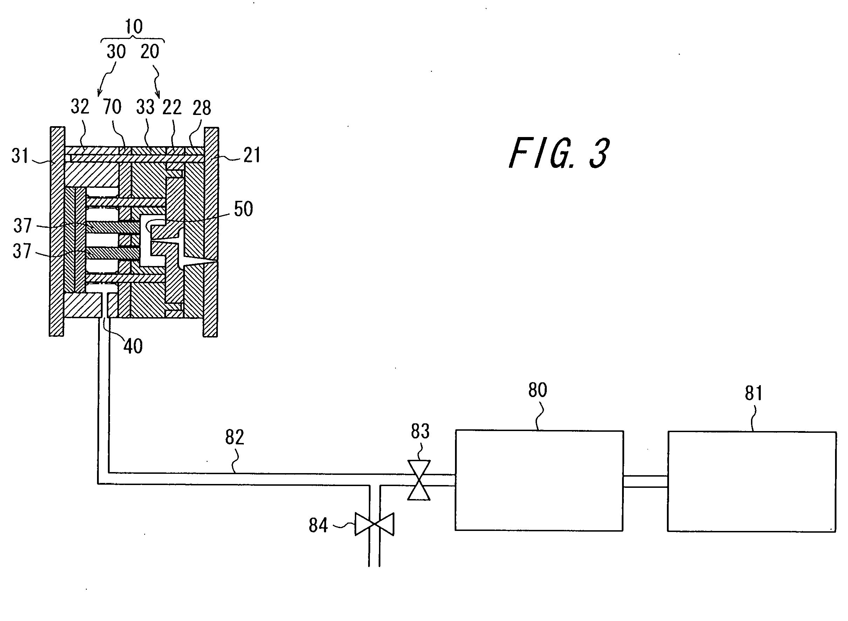

FIG. 3 shows a structure where the mold 10 for injection molding according to the one embodiment described above is connected with a buffer tank 80 and a vacuum pump 81 by way of the reduced pressure suction hole 40 of the movable mold 30. In the Examples, the reduced pressure suction hole 40 is connected with the buffer tank 80 by a reduced pressure suction pipe line 82. The reduced pressure suction pipe line 82 is T-branched before reaching the buffer tank 80. A path of the reduced pressure suction pipe line 82, extending from the T-branched point and connected with the buffer tank 80, is provided with a first valve 83. Another path of the reduced pressure suction pipe line 82, extending from the T-branched point and not connected with the buffer tank 80 (the path having an open end), is provided with a second valve 84. Further, the buffer tank 80 is connected with the vacuum pump 81 so that the inside of the buffer tank 80 maintains a predetermined degree of vacuum.

### (Examples 1 to 6)

Injection molding was carried out by using the mold 10 for injection molding according to the method of the present invention. Specifically, the mold 10 was closed in a state where the inside of the buffer tank 80 was maintained at each of respective degrees of vacuum as shown in TABLE 1 by the vacuum pump 81. Then, the first valve 83 was opened, e.g. responding to a mold-closing signal from a molding apparatus. Elastomer as a molding material was injected into the cavity 50, cooled and cured in a state where the first valve 83 was opened (i.e. a state where the inside of the cavity 50 was being sucked under reduced pressure). Thereafter, the mold was opened with maintaining the state where the first valve 83 was opened. After the mold-opening was completed, the first valve 83 was closed and the second valve 84 was opened and a molded article was collected by using the ejector pins 37 in a state where the suction under reduced pressure had been relieved. In these Examples, molding was carried out such that 16 molded articles were automatically molded by one shot (i.e. mold-closing → injection of material → cooling and curing → mold-opening → removal of molded article) by setting sixteen molds in the injection molding apparatus with cycle time of 20 seconds per one shot. In a case where a molded article was left on the side of the fixed mold after the molding process, two-minute down time was generated because it essentially took two minutes for the molded article to be removed from the mold. The molding process was continued for 2 hours and then the number of shots in which molded articles were left on the side of the fixed mold, the total down time, and the number of produced molded-articles were evaluated. The results are shown in TABLE 1.

### (Comparative Example 1)

Molded articles were produced in the same manner as Examples 1 to 6, except that the mold was opened in a state where the suction under reduced pressure had been relieved by closing the first valve 83 and opening the second valve 84 after injection and curing of the molding material and prior to opening the mold. In this case, automatic molding process was not applicable because molded articles were left on the side of the fixed mold in every shot. Therefore, only the number of shots in which molded articles were left on the side of the fixed mold and had to be manually collected from the mold (cycle time: 30 seconds) and the number of produced molded-articles are shown for reference purpose in TABLE 1.

**TABLE1**

| | Degree of vacuum of buffer tank (kPa) | Number of shots in which molded article was left on the side of fixed mold | Total down time (minute) | Total number of produced molded-articles |
|---|---|---|---|---|
| Comp. Example 1 | 0 | 240 | - | 3840 |
| Example 1 | -50 | 4 | 8 | 5376 |
| Example 2 | -60 | 2 | 4 | 5568 |
| Example 3 | -70 | 2 | 4 | 5568 |
| Example 4 | -80 | 1 | 2 | 5664 |
| Example 5 | -85 | 0 | 0 | 5760 |
| Example 6 | -90 | 0 | 0 | 5760 |

It is obvious from Examples 1 to 6 and Comparative Example 1 that the production efficiency of molded articles can be enhanced by decreasing a possibility that a molded article is left on the side of the fixed mold by carrying out suction under reduced pressure when the mold is opened. Further, it is also obvious that suction under reduced pressure is preferably carried out at a suction pressure equal to or stronger than -85 kPa.

### Industrial Applicability

As described above, according to the method of producing an injection-molded article and the mold for injection molding of the present invention, since the mold section having the molded-article removal means therein, i.e. the mold section on which a molded-article should be left when the mold is opened, is provided with the reduced pressure suction path for depressurizing the cavity, the mold section on which the molded article should be left when the mold is opened can be controlled in a highly precise manner by sucking under reduced pressure the molded article in the cavity by using the reduced pressure suction path when the mold is opened.

## Claims

1. A mold for injection molding, comprising:
a fixed mold and a movable mold for defining a cavity for molding when the mold is closed;
a material injection means provided in at least one of the fixed mold and the movable mold, for injecting a molding material into the cavity;
a molded-article removal means provided in any one of the fixed mold and the movable mold, for removing a molded article from the mold after the mold is opened; and
a reduced pressure suction path provided in the mold having the molded-article removal means therein and capable of depressurizing the cavity.

2. The mold of claim 1, wherein the molded-article removal means is an ejector pin projectable toward the cavity and the reduced pressure suction path is formed by utilizing clearance between the ejector pin and the mold.

3. A method of producing an injection-molded article by using the mold for injection molding of claim 1 or 2, comprising the steps of:
bringing the fixed mold and the movable mold into close contact to close the mold and form the cavity;
forming a molded article by injecting a molding material into the cavity by using the material injection means;
separating the fixed mold and the movable mold to break the close contact therebetween and open the mold; and
removing the molded article by the molded-article removal means to collect the molded article,
wherein suction under reduced pressure is applied to the cavity by using the reduced pressure suction path at least in the mold-opening step.

4. The method of producing an injection-molded article of claim 3, further comprising stopping suction by reduced pressure prior to the molded-article collecting step.
